# EUROPÄISCHE PATENTSCHRIFT

(11) **EP 1 193 165 B1**
(45) Veröffentlichungstag und Bekanntmachung des Hinweises auf die Patenterteilung: **05.11.2003**
(21) Anmeldenummer: 01122822.8
(22) Anmeldetag: 22.09.2001
(51) Int. Cl.: B62D 33/077

(54) **Montageteil zur elastischen Befestigung von Fahrzeugbodenplatten an einem Fahrzeugrahmen**
Mounting piece to elastically attach vehicle floor panels to a vehicle chassis
Dispositif de montage pour la fixation élastique du platelage de véhicule au châssis du véhicule

(30) Priorität: 02.10.2000 AT 16652000
(43) Veröffentlichungstag der Anmeldung: 03.04.2002
(73) Patentinhaber: Getzner Werkstoffe Holding GmbH, 6706 Bürs (AT)
(72) Erfinder: Mentberger, Christoph, 6700 Bludenz (AT)
(74) Vertreter: Hefel, Herbert, Dipl.-Ing.

(56) Entgegenhaltungen:
- EP-A- 0 622 286
- DD-A- 253 229
- DE-A- 2 251 170

## Beschreibung

Die Erfindung betrifft ein Montageteil zur elastischen Befestigung von Fahrzeugbodenplatten an einem Fahrzeugrahmen, umfassend ein erstes Profilstück, vorzugsweise aus Aluminium oder Kunststoff, welches im Querschnitt gesehen C-förmig ausgebildet ist und einen Bodensteg und vom Bodensteg beidseitig sich nach oben erstreckende Seitenwangen umfaßt, an deren vom Bodensteg abgewandten Enden nach innen auskragende Fortsätze angeordnet sind, und ein zweites Profilstück, vorzugsweise aus Aluminium oder Kunststoff, welches im Querschnitt gesehen H-förmig ausgebildet ist und einen Körper aufweist, von dem jeweils beidseitig untere und obere im wesentlichen horizontal verlaufende Stege ausgehen, die zusammen mit dem Körper untere und obere Auflageflächen bilden, wobei die unteren Stege des zweiten Profilstücks jeweils in den Raum zwischen dem Bodensteg und dem jeweiligen nach innen auskragenden Fortsatz des ersten Profilstücks ragen, und zwischen dem Bodensteg des ersten Profilstücks und der unteren Auflagefläche des zweiten Profilstücks ein erstes elastisches Lagerteil angeordnet ist.

Zur Befestigung von Fahrzeugbodenplatten an einem Fahrzeugrahmen werden herkömmlicherweise auf dem Rahmen elastische Streifen aufgeklebt. Die Bodenplatten werden wiederum auf diese Streifen aufgeklebt. Auf diese Art wird eine schwimmende Montage der Bodenplatten am Fahrzeugrahmen durchgeführt, wodurch auch eine akustische Entkopplung des Fahrzeugbodens vom Fahrzeugrahmen erreicht wird. Eine derartige Montage des Fahrzeugbodens am Fahrzeugrahmen wird insbesondere bei Schienenfahrzeugen durchgeführt. Nachteilig an dieser herkömmlichen Befestigung ist die begrenzte Haltbarkeit der Verbindung der Bodenplatten mit dem Fahrzeugboden. Durch die Verformungen der Bodenplatten aufgrund der beim Betrieb auftretenden Belastungen kann es mit der Zeit zu einem Lösen der Verklebung kommen. Auch der Montageaufwand ist relativ hoch. Weiters besteht keine einfache Demontagemöglichkeit der Bodenplatten, beispielsweise im Falle von Reparaturen.

Aus der DD 253 229 A1 ist weiters ein Montageteil der eingangs genannten Art bekannt. Die Schrift zeigt ein Montageteil nach dem Oberbegriff des Anspruchs 1. Die unteren Stege des zweiten Profilstücks sind hier mit dem darunter angeordneten elastischen Lagerteil kraft- und/oder formschlüssig verbunden. Dadurch wird nicht nur eine elastische Lagerung im Bezug auf Druckbelastungen nach unten erreicht, sondern es können auch Zugbelastungen nach oben aufgenommen werden. Allerdings besteht hierbei die Gefahr des Ablösens des zweiten Profilstücks von diesem elastischen Lagerteil bzw. ist die Herstellung des Montageteils mit einem zusätzlichen Aufwand verbunden.

Aufgabe der Erfindung ist es, ein verbessertes Montageteil der eingangs genannten Art bereitzustellen. Erfindungsgemäß gelingt durch ein Montageteil mit dem Merkmalen des Anspruchs 1. Ein erfindungsgemäßes Montageteil ist einfach herstellbar und robust, so daß auch die Dauerbelastungen des rauhen Alltagsbetriebs zuverlässig aufgenommen werden können.

Zur Befestigung des Montageteils am Fahrzeugrahmen bzw. der Bodenplatten am Montageteil bestehen verschiedene Möglichkeiten. Das erste Profilstück kann mit dem Fahrzeugrahmen verklebt werden oder verschraubt werden (durch eine Verschraubung von unten her). Auch eine formschlüssige Verbindung, beispielsweise durch Einklipsen des ersten Profilstückes in ein Gegenstück nach Art eines Rastverschlusses ist denkbar und möglich. Für die Verbindung zwischen den Bodenplatten und dem zweiten Profilstück ist eine Verschraubung bevorzugt. Durch die groß ausführbare Materialbreite des Körpers des zweiten Profilstücks ist eine solche Verschraubung, insbesondere mit selbstschneidenden Schrauben problemlos möglich. Auch eine Befestigung mittels eines Klips-Mechanismus nach Art eines Rastverschlusses könnte vorgesehen sein. Weiters könnten die Bodenplatten an den oberen Auflageflächen der zweiten Profilstücke festgeklebt werden. Da die Verklebung hier nicht an einem elastischen Teil erfolgt, welches elastisch verformbar ist, sondern die elastischen Verformungen in den Dämpfungsteilen auftreten, können derartige Verklebungen vergleichsweise zuverlässig und haltbar ausgeführt werden.

Weitere Vorteile und Einzelheiten der Erfindung werden im folgenden anhand der beiliegenden Zeichnung erläutert. In dieser zeigen:
- Fig. 1: eine schematische Draufsicht auf das erfindungsgemäße Montageteil;
- Fig. 2: einen Schnitt entlang der Linie A-A von Fig. 1;
- Fig. 3: eine schematische Darstellung der Befestigung der Fahrzeugbodenplatten am Fahrzeugrahmen mittels des Montageteils und die
- Fig. 4: bis 6 in schematischer Weise den Ablauf der Herstellung des Montageteils.

Das erfindungsgemäße Montageteil umfaßt erste und zweite Profilstücke 1, 2, die vorzugsweise aus Aluminium bestehen. Das erste Profilstück 1 ist im Querschnitt gesehen C-förmig ausgebildet und weist einen Bodensteg 3 und vom Bodensteg 3 beidseitig sich nach oben erstreckende Seitenwangen 4 auf. An den vom Bodensteg abgewandten Enden der Seitenwangen sind nach innen auskragende Fortsätze 5 angeordnet. Das zweite Profilstück 2 ist im Querschnitt gesehen H-förmig ausgebildet. Es weist einen Körper 6 auf, von dem jeweils beidseitig untere und obere im wesentlichen horizontal verlaufende Stege 7, 8 ausgehen. Die unteren Stege 7 bilden zusammen mit der Unterseite des Körpers 6 eine untere Auflagefläche 9 und die oberen Stege 8 bilden zusammen mit der Oberseite des Körpers 6 eine obere Auflagefläche 10. Die unteren Stege 7 des zweiten Profilstücks 2 ragen jeweils in den Raum 11 zwischen dem Bodensteg 3 und dem jeweiligen nach innen auskragenden Fortsatz 5 des ersten Profilstücks, d.h., die nach innen auskragenden Fortsätze 5 des ersten Profilstücks übergreifen die unteren Stege 7 des zweiten Profilstücks 2. Zwischen dem Bodensteg 3 des ersten Profilstücks und der unteren Auflagefläche 9 des zweiten Profilstücks 2 ist ein erstes elastisches Lagerteil 12 angeordnet und zwischen den Oberseiten der unteren Stege 7 des zweiten Profilstücks 2 und den Unterseiten der nach innen auskragenden Fortsätze 5 des ersten Profilstücks sind jeweils zweite elastische Lagerteile 13 angeordnet. Das zweite Profilstück 2 ist somit sowohl in bezug auf Druckbelastungen nach unten als auch in bezug auf Zugbelastungen nach oben elastisch gelagert. Das erste elastische Lagerteil 12 ist bevorzugterweise im ersten Profilstück eingeklebt. Ebenso sind die zweiten elastischen Lagerteile 13 bevorzugterweise an den Oberseiten der unteren Stege 7 des zweiten Profilstücks angeklebt. Die Fortsätze 5 sind bevorzugterweise an die zweiten elastischen Lagerteile 13 angepreßt, wodurch das Montageteil im wesentlich spielfrei zusammengehalten wird. An der unteren Auflagefläche 9 des zweiten Profilstücks 2 sind Vorsprünge 14 angeordnet, über die das zweite Profilstück im unbelasteten Zustand bzw. bei geringen Druckbelastungen auf dem ersten elastischen Lagerteil 12 aufliegt. Dadurch ist auch bei geringen Belastungen des Fahrzeugbodens eine gute Wirksamkeit des Federsystems und dadurch eine gute Entkopplung des Fahrzeugbodens vom Fahrzeugrahmen und geringe Schallübertragung gegeben. Bei steigender Belastung des Bodens beginnt ab einer bestimmten Last die gesamte Auflagefläche 9 des zweiten Profilstücks 2 zu tragen. Dies hat den Vorteil, daß die auftretenden Einfederungen begrenzt werden.

Die elastischen Lagerteile 12, 13 bestehen bevorzugterweise aus zelligen PU-Elastomeren. Denkbar und möglich wäre auch die Verwendung von Kautschuk, thermoplastischen Elastomeren, Gummi-Kork-Verbunden usw. Aus Gewichtsgründen bestehen die ersten und zweiten Profilstücke bevorzugterweise aus Aluminium. Denkbar und möglich wäre aber beispielsweise auch die Verwendung von Stahl.

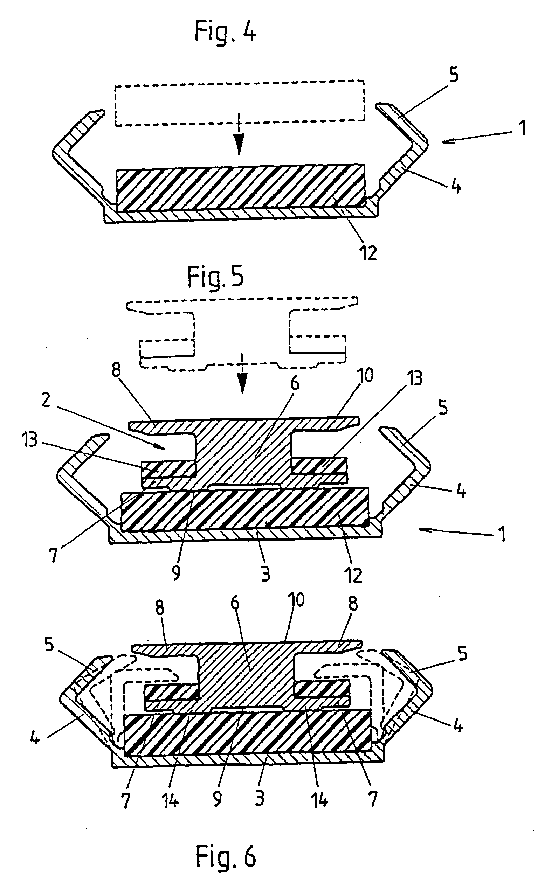

In den Fig. 4 bis 6 ist der Herstellungsvorgang des Montageteils schematisch dargestellt. Nach dem Einkleben des elastischen Lagerteils 12 in das erste Profilstück 1 und dem Einsetzen des zweiten Profilstücks 2 mit den auf die unteren Stege 8 aufgeklebten elastischen Lagerteilen 13 werden die zunächst nach außen abstehenden Seitenwangen 4 durch einen Umformprozeß nach innen gebogen und das Montageteil fertiggestellt.

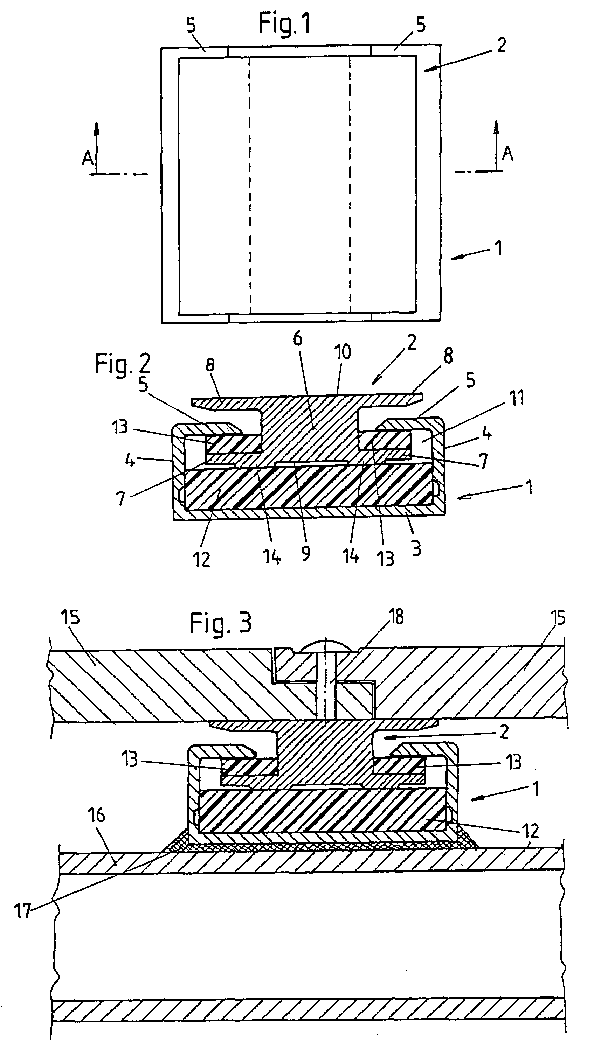

Fig. 3 veranschaulicht eine mögliche Befestigung von Fahrzeugbodenplatten 15 am Fahrzeugrahmen 16 mittels eines erfindungsgemäßen Montageteils. Das Montageteil ist an einem Profilrohr des Fahrzeugrahmens 16 hier mittels eines Klebstoffs 17 festgeklebt. Die Fahrzeugbodenplatten sind mittels einer selbstschneidenden Schraube 18 am Körper 6 des zweiten Profilstücks 2 festgeschraubt. Aufgrund der großen Materialbreite des Körpers 6 des zweiten Profilstücks wäre eine solche Verschraubung auch bei gestoßenen Deckplatten 15 problemlos möglich (die Schrauben könnten hier parallel sowie senkrecht zur Zeichenebene versetzt angeordnet sein).

Das erfindungsgemäße Montageteil eignet sich insbesondere zur Befestigung von Bodenplatten von Schienenfahrzeugen, beispielsweise für Eisenbahnwaggonböden.

## Patentansprüche

1. Montageteil zur elastischen Befestigung von Fahrzeugbodenplatten an einem Fahrzeugrahmen, umfassend ein erstes Profilstück (1), vorzugsweise aus Aluminium oder Kunststoff, welches im Querschnitt gesehen C-förmig ausgebildet ist und einen Bodensteg (3) und vom Bodensteg beidseitig sich nach oben erstreckende Seitenwangen (4) umfaßt, an deren vom Bodensteg (3) abgewandten Enden nach innen auskragende Fortsätze (5) angeordnet sind, und ein zweites Profilstück (2), vorzugsweise aus Aluminium oder Kunststoff, welches im Querschnitt gesehen H-förmig ausgebildet ist und einen Körper (6) aufweist, von dem jeweils beidseitig untere und obere im wesentlichen horizontal verlaufende Stege (7, 8) ausgehen, die zusammen mit dem Körper (6) untere und obere Auflageflächen (9, 10) bilden, wobei die unteren Stege (7) des zweiten Profilstücks (2) jeweils in den Raum (11) zwischen dem Bodensteg (3) und dem jeweiligen nach innen auskragenden Fortsatz (5) des ersten Profilstücks ragen, und zwischen dem Bodensteg (3) des ersten Profilstücks (1) und der unteren Auflagefläche (9) des zweiten Profilstücks (2) ein erstes elastisches Lagerteil (12) angeordnet ist, **dadurch gekennzeichnet, daß** zwischen den nach innen auskragenden Fortsätzen (5) des ersten Profilstücks (1) und den unteren Stegen (7) des zweiten Profilstücks (2) jeweils zweite elastische Lagerteile (13) angeordnet sind.

2. Montageteil nach Anspruch 1, **dadurch gekennzeichnet, daß** an der unteren Auflagefläche (9) des zweiten Profilstücks (2) mindestens zwei Vorsprünge (14) angeordnet sind, über die das zweite Profilstück (2) im unbelasteten bzw. gering belasteten Zustand auf dem ersten elastischen Lagerteil (12) aufliegt.

3. Montageteil nach Anspruch 1 oder Anspruch 2, **dadurch gekennzeichnet, daß** das erste elastische Lagerteil (12) mit dem ersten Profilstück (1) verklebt ist.

4. Montageteil nach einem der Ansprüche 1 bis 3, **dadurch gekennzeichnet, daß** die zweiten elastischen Lagerteile (13) mit dem zweiten Profilstück (2) verklebt sind.

5. Montageteil nach einem der Ansprüche 1 bis 4, **dadurch gekennzeichnet, daß** das erste elastische Lagerteil (12) und/oder die zweiten elastischen Lagerteile (13) aus einem, vorzugsweise zelligen, Polyurethan-Elastomer besteht bzw. bestehen.

6. Montageteil nach einem der Ansprüche 1 bis 5, **dadurch gekennzeichnet, daß** die nach innen auskragenden Fortsätze (5) am ersten Profilstück (1) die unteren Stege (2) übergreifen, vorzugsweise zumindest über die halbe Länge der unteren Stege (7) des zweiten Profilstücks (2).

7. Montageteil nach einem der Ansprüche 1 bis 6, **dadurch gekennzeichnet, daß** die nach innen auskragenden Fortsätze (5) am ersten Profilstück 1 an die Oberseiten der zweiten elastischen Lagerteile (13) angepreßt sind.

## Claims

1. A mounting part for resiliently securing vehicle floor plates to a vehicle frame, comprising a first profiled piece (1), preferably made from aluminium or plastics, which piece is C-shaped in cross-section and comprises a floor web (3) and side faces (4), which extend upwards from the floor web on both sides and on whose ends further from the floor web (3) are arranged inwardly projecting extensions (5), and a second profiled piece (2), preferably made from aluminium or plastics, which piece is H-shaped in cross-section and has a body (6), from both sides of which there extend lower and upper substantially horizontally extending arms (7, 8) which, together with the body (6), form lower and upper bearing faces (9, 10), the lower arms (7) of the second profiled piece (2) each projecting into the space (11) between the floor web (3) and the respective inwardly facing projection (5) of the first profiled piece, and there being arranged between the floor web (3) of the first profiled piece (1) and the lower bearing face (9) of the second profiled piece (2) a first resilient bearing part (12), **characterised in that** between the inwardly projecting extensions (5) of the first profiled piece (1) and the lower arms (7) of the second profiled piece (2) there are arranged respective second resilient bearing parts (13).

2. A mounting part according to claim 1, **characterised in that** on the lower bearing face (9) of the second profiled piece (2) there are arranged at least two projections (14) by means of which the second profiled piece (2) in an unstressed or only slightly stressed state rests on the first resilient bearing part (12).

3. A mounting part according to claim 1 or claim 2, **characterised in that** the first resilient bearing part (12) is bonded to the first profiled piece (1).

4. A mounting part according to any one of claims 1 to 3, **characterised in that** the second resilient bearing parts (13) are bonded to the second profiled piece (2).

5. A mounting part according to any one of claims 1 to 4, **characterised in that** the first resilient bearing part (12) and/or the second resilient bearing parts (13) are made from a, preferably cellular, polyurethane elastomer.

6. A mounting part according to any one of claims 1 to 5, **characterised in that** the inwardly projecting extensions (5) on the first profiled piece (1) overlap the lower arms (2) [*sic ― recte* 7], preferably at least over half the length of the lower arms (7) of the second profiled piece (2).

7. A mounting part according to any one of claims 1 to 6, **characterised in that** the inwardly projecting extensions (5) on the first profiled piece 1 are pressed against the upper sides of the second resilient bearing parts (13).

## Revendications

1. Elément de montage pour la fixation élastique de plaques de plancher de véhicules sur un châssis-cadre de véhicule, comprenant une première pièce profilée (1), de préférence en aluminium ou en matière plastique, qui se présente en une coupe transversale en forme de C ainsi qu'une nervure de fond (3) et des joues latérales (4) s'étendant des deux cotés de la nervure de fond vers le haut, dont extrémités opposées à la nervure de fond (3) comportant des appendices (5) saillant vers l'intérieur, et une deuxième pièce profilée (2), de préférence en aluminium ou en matière plastique, qui se présente en une coupe transversale en forme de H et un corps (6) des deux côtés duquel partent respectivement des nervures inférieures et supérieures (7, 8) s'étendant pour l'essentiel horizontalement, lesquelles forment conjointement avec le corps (6) des surfaces d'appui inférieures et supérieures (9, 10), les nervures inférieures (7) de la deuxième pièce profilée (2) avançant respectivement dans l'espace (11) entre la nervure de fond (3) et l'appendice (5) saillant vers l'intérieur respectif de la première pièce profilée, avec entre la nervure de fond (3) de la première pièce profilée (1) et la surface d'appui inférieure (9) de la deuxième pièce profilée (2) un premier support élastique (12),
**caractérisé par**
respectivement des seconds supports élastiques (13) disposés entre les appendices (5) saillant vers l'intérieur de la première pièce profilée (1) et les nervures inférieures (7) de la deuxième pièce profilée (2).

2. Elément de montage selon la revendication 1,
**caractérisé en ce que**
la surface d'appui inférieure (9) de la deuxième pièce profilée (2) comporte au moins deux saillies (14) par l'intermédiaire desquelles la deuxième pièce profilée (2) repose à l'état non ou peu sollicité sur le premier support élastique (12).

3. Elément de montage selon la revendication 1 ou la revendication 2,
**caractérisé en ce que**
le premier support élastique (12) est solidarisé par collage avec la première pièce profilée (1).

4. Elément de montage selon l'une quelconque des revendications 1 à 3,
**caractérisé en ce que**
les seconds supports élastiques (13) sont solidarisés par collage avec la deuxième pièce profilée (2).

5. Elément de montage selon l'une quelconque des revendications 1 à 4,
**caractérisé en ce que**
le premier support élastique (12) et/ou les seconds supports élastiques (13) est ou sont réalisé(s) en un élastomère de polyuréthane de préférence cellulaire.

6. Elément de montage selon l'une quelconque des revendications 1 à 5,
**caractérisé en ce que**
les appendices (5) saillant vers l'intérieur sur la première pièce profilée (1) chevauchent les nervures inférieures (7), de préférence au moins sur la moitié de la longueur des nervures inférieures (7) de la deuxième pièce profilée (2).

7. Élément de montage selon l'une quelconque des revendications 1 à 6,
**caractérisé en ce que**
les appendices (5) saillant vers l'intérieur sur la première pièce profilée (1) sont pressés contre les faces supérieures des seconds supports élastiques (13).
